# EUROPÄISCHE PATENTSCHRIFT

(11) **EP 0 645 895 B1**
(45) Veröffentlichungstag und Bekanntmachung des Hinweises auf die Patenterteilung: **11.06.2003**
(21) Anmeldenummer: 94112714.4
(22) Anmeldetag: 16.08.1994
(51) Int. Cl.: H04B 1/59, G01S 13/02

(54) **Fahrzeuggerät zur Datenübertragung an eine ortsfeste Bake**
Apparatus in a vehicle for transmitting data to a fixed beacon
Dispositif dans un véhicule pour la transmission de données en direction d'une balise fixe

(30) Priorität: 24.09.1993 DE 4332475
(43) Veröffentlichungstag der Anmeldung: 29.03.1995
(73) Patentinhaber: ROBERT BOSCH GMBH, 70442 Stuttgart (DE)
(72) Erfinder: Rossius, Hans-Ulrich, Dipl.-Ing., D-31177 Harsum (DE); Bode, Friedrich-Wilhelm, Dipl.-Ing., D-31552 Apelern (DE); Vahle, Andreas, D-31141 Hildesheim (DE)

(56) Entgegenhaltungen:
- EP-A- 0 479 058
- EP-A- 0 480 413
- US-A- 5 191 345
- BLYTHE P T ET AL: "A SHORT-RANGE ROAD TO VEHICLE MICROWAVE COMMUNICATIONS LINK FOR AUTOMATIC DEBITING AND OTHER RTI SERVICES" ADVANCED TELEMATICS IN ROAD TRANSPORT. PROCEEDINGS OF THE DRIVE CONFERENCE, 4-6 FEBR. 1991, BRUSSELS, BE, Bd. 1, Nr. 10, 1. Januar 1991, Seiten 248-268, XP000443997

## Beschreibung

### Stand der Technik

Die Erfindung geht aus von einem Fahrzeuggerät zur Datenübertragung an eine ortsfeste Bake nach der Gattung des Hauptanspruchs. Aus der Veröffentlichung "Advanced Telematics in Road Transport', Proceedings of the DRIVE-Conference, 4.-6. Februar 1991, Seiten 248 bis 268, ist schon eine Datenübertragung nach dem passiven Transponderverfahren bekannt. Dabei wird von einer ortsfesten Bake ein kontinuierlich moduliertes Signal an ein Fahrzeuggerät gesendet. Das Fahrzeuggerät moduliert das empfangene Signal mit intern gespeicherten Daten und sendet es durch Reflexion an die Bake bzw. deren Gerät zurück. Dabei wird die Modulation des Trägersignals am Fußpunkt der Antenne mit für die beiden logischen Zustände des Datensignals vorgesehenen verschiedenen Frequenzen durchgeführt. Dieses Signal wird von der Antenne des Fahrzeuggerätes reflektiert, so daß im Fahrzeug keine eigene Sendeleistung bereitgestellt werden muß. Die dabei verwendeten Modulationsverfahren sind bekannte Frequenzcodierungen, durch die Seitenlinien unterschiedlicher Frequenz in Abhängigkeit von den logischen Pegeln '1' oder '0' (ASK mit FSK-Unterträger) entstehen.

Bei einem bekannten Fahrzeuggerät wird das reflektierte Datensignal durch Ändern der Abschlußimpedanz der Antenne erzeugt. Dabei wird für den Mikrowellenbereich, bespielsweise 5,8 GHZ, eine Mikrowellendiode verwendet, die abwechselnd in ihrem Flußbereich und Sperrbereich betrieben wird. Dabei ergibt sich der Nachteil, daß im Flußbereich ein relativ großer Strom und im Sperrbereich praktisch kein Strom fließt. Dadurch ist die Mikrowellendiode zum Senden und Empfangen nicht optimal angepaßt.

Die EP 480413 A2 zeigt eine Anordnung, bei der in einer mobilen Einrichtung von einer ortsfesten Sende- Empfangseinrichtung ausgesandte Signale empfangen werden. Es wird eine Antenne dargestellt, mit einer Steuerschaltung, mittels der das empfangene Signal moduliert wird und an die ortsfeste Einrichtung zurückgesendet wird. Dabei ist als steuerbare Impedanz eine variierbare Kapazitätsdiode vorgesehen. Hinweise, wie eine Fahrzeuggerät für einen normalen wechselweisen Sende- und Empfangsbetrieb optimiert werden kann, werden nicht gegeben.

Das US-Patent 5 191 345 zeigt ein System zum Datenaustausch mit Mikrowellen, dessen steuerbare Impedanz zur Aktivierung des Systems verkleinert werden kann. Hinweise auf eine Optimierung eines Fahrzeuggerät für einen normalen wechselweisen Sende- und Empfangsbetrieb werden auch hier nicht erwähnt.

Die EP 479 058 A2 zeigt eine Anordnung, bei der in einer mobilen Einrichtung von einer ortsfesten Sende-/Empfangseinrichtung ausgesandte Signale empfangen werden. Es wird eine Antenne dargestellt, mit einem Modulator mit Impedanzwandler und Diode, mittels denen das empfangene Signal moduliert wird und an die ortsfeste Einrichtung zurückgesandt wird. Hinweise, wie ein Fahrzeuggerät für einen normalen wechselweisen Sende- und Empfangsbetrieb optimiert werden kann, werden auch hier nicht gegeben.

Das erfindungsgemäße Fahrzeuggerät zur Datenübertragung hat demgegenüber den Vorteil, daß durch die wenigstens drei vorgebbaren Ströme die steuerbare Impedanz sowohl zum Senden als auch Empfangen optimiert wird. Dabei ist die Steuerschaltung sehr einfach aufgebaut, so daß das Fahrzeuggerät als Massengerät auch preisgünstig herstellbar ist.

Durch die in den abängigen Ansprüchen aufgeführten Maßnahmen sind vorteilhafte Weiterbildungen und Verbesserungen des im Hauptanspruch angegebenen Fahrzeuggerätes möglich. Besonders vorteilhaft ist, daß durch die zwei Strom- oder Spannungsquellen drei gewünschte Arbeitsströme oder Arbeitsbereiche der Impedanz einstellbar sind. Dadurch kann die Empfindlichkeit zum Empfangen und Senden optimal gesteuert werden.

Vorteilhaft ist weiter, daß die steuerbare Impedanz auch durch zwei logisch verknüpfbare Signale ansteuerbar ist, die von einer Digitalschaltung bereitgestellt werden. Eine aufwendige Umwandlung und Anpassung der Signale erübrigt sich.

Durch die Verwendung eines Halbleiterschalters, beispielsweise einer Diode für den Mikrowellenbereich, ergibt sich eine schnelle und verlustarme Schaltung.

Um das Fahrzeuggerät möglichst einfach zu gestalten, genügt für die Steuerschaltung ein Steuereingang, dessen Pegel den Strom durch die Impedanz sowohl im Empfangsfall als auch im Sendefall steuert. In Verbindung mit den am Modulationseingang anliegenden Pegeln ergibt sich im Sendefall ein zweiter und dritter Arbeitsbereich mit entsprechenden Strömen. Die Ströme sind über Widerstandsteiler leicht einstellbar, so daß die Mikrowellendiode im Flußbereich optimal arbeiten kann. Dadurch ergibt sich vorteilhaft für jeden Betriebsfall eine sichere Datenübertragung.

### Zeichnung

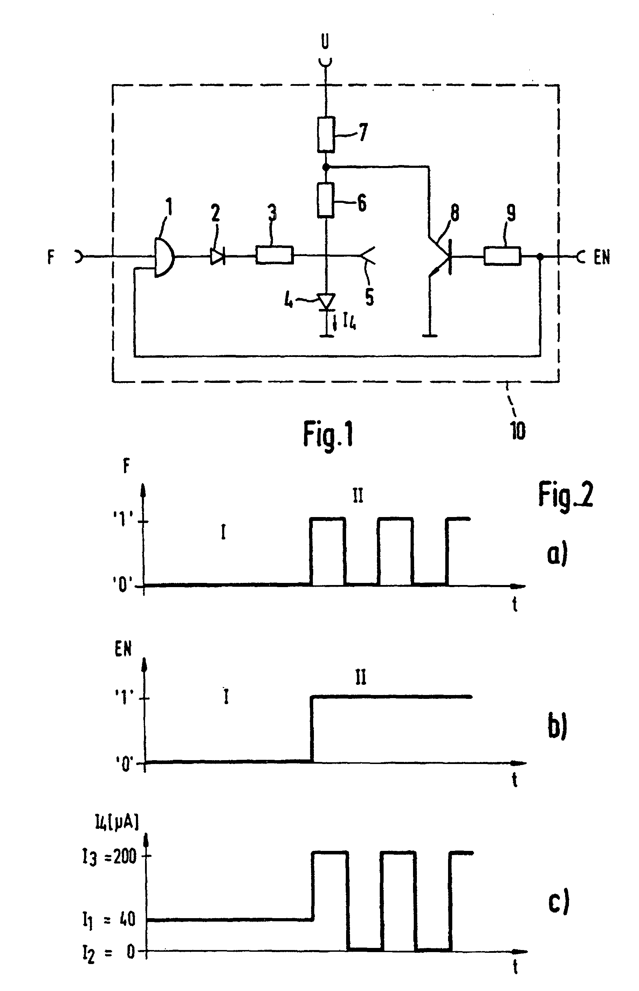

Ein Ausführungsbeispiel der Erfindung ist in der Zeichnung dargestellt und in der nachfolgenden Beschreibung näher erläutert. Es zeigen Figur 1 ein Blockschaltbild der Steuerung für das Fahrzeuggerät, Figur 2a, 2b und 2c zeigen verschiedene Diagramme.

### Beschreibung des Ausführungsbeispiels

Figur 1 zeigt eine Steuerschaltung 10, die für die Steuerung einer steuerbaren Impedanz 4, beispielsweise einer Mikrowellendiode verwendbar ist. Die Steuerschaltung 10 ist als Teil eines nicht dargestellten Fahrzeuggerätes anzusehen. Das Fahrzeuggerät ist per se bekannt. Die Steuerschaltung 10 hat eine Sende- und Empfangsantenne 5, an deren Fußpunkt die Mikrowellendiode 4 angeschlossen und über die Anode gegen Masse geschaltet ist. An den Fußpunkt ist einerseits ein Modulationseingang F über ein Gatter 1, eine Diode 2 und einen ersten Widerstand 3 angeschlossen. Andererseits ist an den Fußpunkt eine Spannungsquelle U über einen zweiten Widerstand 7 und einen in Reihe geschalteten dritten Widerstand 6 angeschlossen. Der Mittenabgriff zwischen dem zweiten Widerstand 7 und dem dritten Widerstand 6 liegt im Lastkreis eines Schalttransistors 8, dessen Basis über einen vierten Widerstand 9 mit einem Steuereingang EN verbunden ist. Der Emitter des Schalttransistors 8, der als NPN-Transistor ausgebildet ist, ist zusammen mit der Anode der Diode 4 auf Masse gelegt. Der Steuereingang EN ist noch mit einem weiteren Eingang des Gatters 1 verbunden.

Anhand der Figuren 2a, 2b und 2c wird die Funktionsweise dieser Anordnung näher erläutert. In Figur 2a ist ein Diagramm dargestellt, das eine Eingangsfunktion am Modulationseingang F für ein Digitalsignal mit den logischen Pegeln '1' und '0' bildet. Auf der gleichen Zeitachse t ist in Figur 2b eine Eingangsfunktion am Steuereingang EN aufgetragen. Die Steuerfunktion hat in einem ersten Bereich I einen '0'-Wert und in dem zweiten Bereich II den Pegel '1'. Unter Figur 2b ist in Figur 3c der Stromverlauf I₄ an der Mikrowellendiode 4 in Abhängigkeit von den Pegeln der Eingänge F und EN dargestellt. Zunächst wird der erste Bereich I betrachtet. Es wird angenommen, daß dieser Bereich für den Empfang des kontinuierlichen Signals vorgesehen ist. In diesem Fall ist der Eingangspegel sowohl am Modulationseingang F als auch am Steuereingang EN '0'. Dadurch ist der Schalttransistor 8 gesperrt und die Spannungsquelle U speist einen Strom I₄ in Flußrichtung der Mikrowellendiode 4 ein. Der Stromwert ist bestimmt durch die Widerstände 6 und 7. Für den Empfangsfall soll beispielsweise durch die Mikrowellendiode 4 ein Steuerstrom I₁ = 40µA fließen. Dieser Strom I₁ fließt durch die Diode, wenn die Spannungsquelle U ≈ 8V hat, der zweite Widerstand 7 10 kOhm und der dritte Widerstand 180 kOhm hat. Der Strom I₁ ist in Figur 2c für den ersten Bereich I, den Empfangsbereich dargestellt.

Beim Sendebetrieb im Bereich II wird nun der Steuereingang EN auf logisch '1' gesetzt. Am Modulationseingang F, an dem nun die gespeicherten Daten des Fahrzeuggerätes mit logischen '1' und '0'-Pegeln anliegen, ergibt sich der in Figur 2a dargestellte Kurvenverlauf. Wird nun zeitlich entsprechend der Figur 2b der Steuereingang EN auf logisch '1' gesetzt, dann ergibt sich der in Figur 2c dargestellte Kurvenverlauf für den Strom I₄. Im Sendebetrieb ist nun der Schalttransistor 8 durchgeschaltet, so daß der Mittenabgriff zwischen dem zweiten Widerstand 7 und dem dritten Widerstand 6 auf Masse geschaltet ist. Das am Modulationseingang F anliegende Signal gelangt nun über das Gatter 1 und die Diode 2 mit dem nachgeschalteten ersten Widerstand 3 auf die Diode 4. Durch sie fließt nun beispielsweise ein Strom I₃ von 200 µA. Dieser Strom ist durch die Eingangsspannung und den ersten Widerstand 3 bestimmt und kann so angepaßt werden, daß die Diode 4 im optimalen Arbeitsbereich arbeitet. Liegt dagegen am Modulationseingang F ein '0'-Pegel an, dann ist die Diode 4 stromlos. Dieses ist in Figur 2c durch den Wert I₂ = 0 angedeutet.

Die Umschaltung von Empfangen auf Senden erfolgt durch den entsprechenden Pegel am Steuereingang EN.

Als steuerbare Impedanz können auch Transistoren oder entsprechende Halbleiter verwendet werden.

## Patentansprüche

1. Fahrzeuggerät zur Datenübertragung an eine ortsfeste Bake, die eine Sende- und Empfangseinrichtung aufweist, mit einer Antenne zum Empfang eines von der Bake ausgesandten kontinuierlichen Signal und mit einer Steuerschaltung, mittels der das empfangene Signal moduliert und an die Bake zurücksendbar ist, wobei die Steuerschaltung (10) eine steuerbare Impedanz (4) aufweist, **dadurch gekennzeichnet, dass** die Steuerschaltung ausgebildet ist, wenigstens drei Arbeitsströme für die steuerbare Impedanz zu liefern, wobei die Steuerschaltung einen Steuereingang und einen Modulationseingang aufweist und der Arbeitsbereich der steuerbaren Impedanz durch die Spannungspegel an den beiden Eingängen bestimmbar ist, wobei bei einem ersten Pegel ein vorgegebener erster Steuerstrom durch die steuerbare Impedanz fließt und dass dieser Steuerstrom zum Empfang des von der Bake gesendeten kontinuierlichen Signals verwendbar ist und wobei bei Anlegen eines zweiten Pegels am Steuereingang die steuerbare Impedanz erhöht wird, so dass in Abhängigkeit vom Pegel des Modulationseingangs zum Senden ein zweiter und dritter Steuerstrom der steuerbaren Impedanz schaltbar ist.

2. Fahrzeuggerät nach Anspruch 1, **dadurch gekennzeichnet, daß** die Steuerung (10) wenigstens zwei Strom- oder Spannungsquellen für die Speisung der steuerbaren Impedanz (4) aufweist.

3. Fahrzeuggerät nach einem der vorhergehenden Ansprüche, **dadurch gekennzeichnet, daß** die Steuerschaltung (10) die steuerbare Impedanz (4) mittels zweier logisch verknüpfbarer Signale ansteuert.

4. Fahrzeuggerät nach einem der vorhergehenden Ansprüche, **dadurch gekennzeichnet, daß** die steuerbare Impedanz ein Halbleiterschalter, vorzugsweise eine Diode ist.

## Claims

1. Vehicle apparatus for transmitting data to a fixed beacon which has a transceiver device, having an antenna for receiving a continuous signal which is emitted by the beacon and having a control circuit by means of which the received signal is modulated and can be transmitted back to the beacon, the control circuit (10) having a controllable impedance (4), **characterized in that** the control circuit is designed to supply at least three working currents for the controllable impedance, the control circuit having a control input and a modulation input and the working range of the controllable impedance being capable of being determined by the voltage levels at the two inputs, in which, when there is a first level, a predefined first control current flows through the controllable impedance and this control current can be used to receive the continuous signal which is transmitted by the beacon, and the controllable impedance is increased when a second level is applied to the control input, with the result that a second and third control current of the controllable impedance can be connected as a function of the level of the modulation input for transmission.

2. Vehicle apparatus according to Claim 1, **characterized in that** the controller (10) has at least two current sources or voltage sources for feeding the controllable impedance (4).

3. Vehicle apparatus according to one of the preceding claims, **characterized in that** the control circuit (10) actuates the controllable impedance (4) by means of two signals which can be combined logically.

4. Vehicle apparatus according to one of the preceding claims, **characterized in that** the controllable impedance is a semiconductor switch, preferably a diode.

## Revendications

1. Appareil de véhicule pour la transmission de données à une balise fixe, comprenant un dispositif émetteur-récepteur équipé d'une antenne pour recevoir un signal continu émis par la balise et d'un circuit de commande par l'intermédiaire duquel le signal est modulé et peut être renvoyé à la balise, ce circuit (10) comportant une impédance (4) commandable,
**caractérisé en ce que**
- le circuit de commande est constitué de manière à délivrer au moins trois intensités de travail à l'impédance commandable,
- le circuit de commande présente une entrée de commande et une entrée de modulation, et le niveau de tension à ces deux entrées permet de déterminer la plage de travail de l'impédance commandable,
- quand un premier niveau est appliqué à l'entrée de commande, un premier courant de commande prédéfini passe dans l'impédance commandable et ce courant peut être utilisé pour recevoir le signal continu envoyé par la balise et, quand un deuxième niveau est appliqué à l'entrée de commande, l'impédance commandable est augmentée, de sorte qu'en fonction du niveau de l'entrée de modulation, un deuxième et un troisième courant de commande peuvent être envoyés à l'impédance commandable pour émettre.

2. Appareil de véhicule selon la revendication 1,
**caractérisé en ce que**
la commande (10) présente au moins deux sources de courant ou de tension pour alimenter l'impédance commandable (4).

3. Appareil de véhicule selon l'une quelconque des revendications précédentes,
**caractérisé en ce que**
le circuit de commande (10) commande l'impédance commandable (4) au moyen de deux signaux connectables logiquement.

4. Appareil de véhicule selon l'une quelconque des revendications précédentes,
**caractérisé en ce que**
l'impédance commandable est un contacteur à semi-conducteur, de préférence une diode.
